# EUROPEAN PATENT SPECIFICATION

(11) **EP 0 884 164 B1**
(45) Date of publication and mention of the grant of the patent: **14.08.2002**
(21) Application number: 98500129.6
(22) Date of filing: 29.05.1998
(51) Int. Cl.: B29C 65/02, B60J 10/00, B05D 1/14

(54) **A method of flocking profiled strips and a profiled strip flocked by the method.**
Verfahren zum Beflocken von profilierten Streifen und beflockte Streifen
Procédé de flocage de bandes profilées et bande profilée floquée

(30) Priority: 11.06.1997 ES 9701272; 04.07.1997 ES 9701487
(43) Date of publication of application: 16.12.1998
(73) Proprietor: INDUSTRIE ILPEA ESPANA, S.A., Palau de Plegamans (Barcelona) (ES)
(72) Inventor: Fernandez Menendez, Ramon, 08184 Palau de Plegamans (Barcelona) (ES)
(74) Representative: Durán Olivella, Alfonso

(56) References cited:
- EP-A- 0 329 048
- WO-A-81/01905
- CH-A- 650 971
- DE-A- 3 513 093
- DE-A- 4 236 347
- DE-B- 1 238 196
- GB-A- 1 406 899
- GB-A- 2 092 475
- US-A- 4 314 872
- US-A- 4 698 193
- US-A- 5 304 412
- US-A- 5 472 544

## Description

The present invention relates to a method of flocking profiled strips.

Conventionally, profiles are flocked in order to provide a face of the profile or part thereof with characteristics of great softness, which is achieved by the incorporation of a plurality of fine fibres or "flock" arranged substantially perpendicular to the face of the profile to be covered, and which provides the said face with a very soft finish. Profiles with a flocked face are used, amongst other applications, in the automotive field, for example, as profiles for guiding window panes and for other similar applications.

Currently, the method commonly used consists in flocking the profiles individually by placing them inside the flocking chamber, with screens or shields on their edges to delimit the flocked area which individually has a reduced extension, a layer of adhesive first being applied to the face to be flocked, enabling the flock to be incorporated on the desired profile face, thus producing a profile with a flocked face.

The need to protect or screen the areas of the profiles which are not to be flocked requires, on the one hand, considerable usage of labour in order to carry out the work and, on the other hand, a corresponding wastage of flock since the flock which is deposited on the shields or screens will be discarded.

U.S. Patent 4,698,193 discloses a method and apparatus for coextrusion of sealing strips by mechanical attachment by coextrusion of materials which generally differ considerably.

U.S. Patent 4,314,872 discloses profiles of sectional shapes with velour bands or tapes in some parts of the same, in which the velour bands are incorporated to the profile in the process of extrusion in the same nozzle by means of a special guiding part incorporated therein.

UK Patent application 2 092 475 discloses a method for coating a strip material in which a continuous strip receives and adhesive in both surfaces before passing an applicator station in which two vibrators project the flocking powder to respective sets of holes.

The method of the present invention is intended to solve the problems indicated above, achieving a great increase in the efficiency of the flocking operation in the flocking chamber and also a fully integrated construction of the flocked profile, that is, with the incorporation of the flock in the material of the profile without a break. The objectives are achieved by the method of claim 1.

For a better understanding, some drawings showing the method of the present application and profiles produced in accordance therewith are appended by way of non-limiting example.

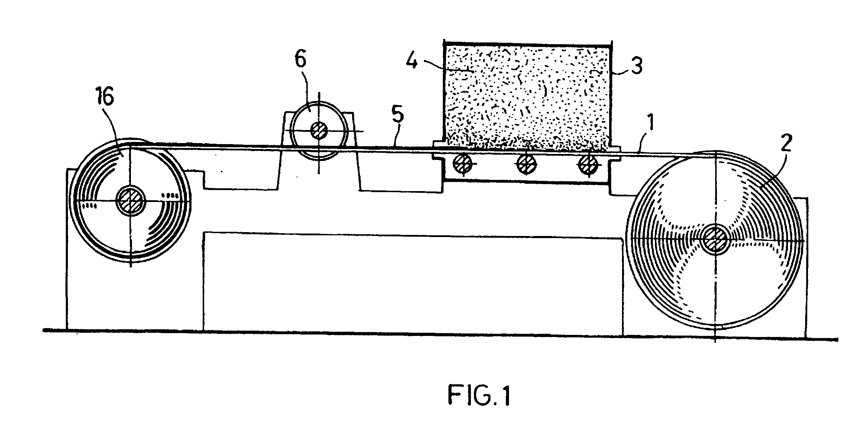

Figure 1 is a partially-sectioned, side elevational view of the flocking plant for implementing the first step of the method.

Figure 2 is a schematic plan view corresponding to Figure 1.

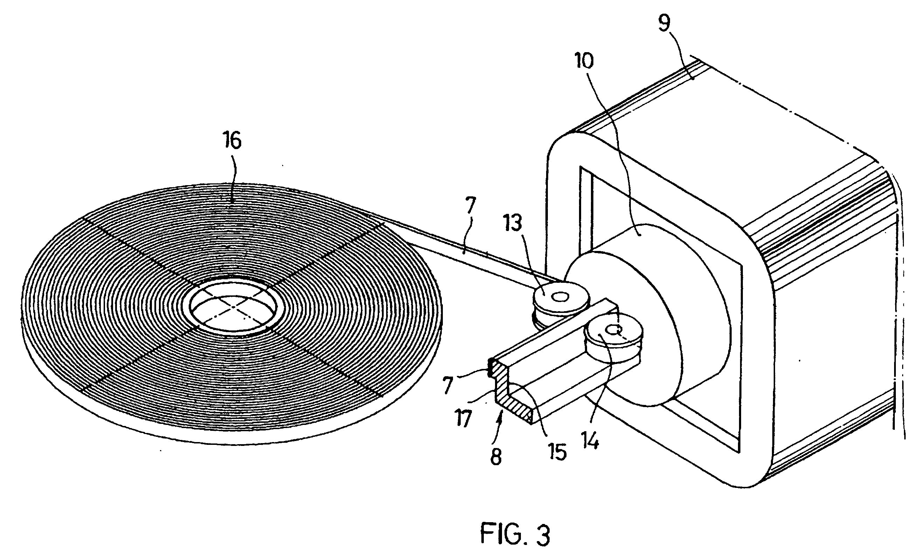

Figure 3 is a perspective view of the cutput of the extrusion head with the fitting of the flocked strip.

Figures 4, 5 and 6 are schematic cross-sections showing the coupling of the flocked strip with the profile in various stages until it is fully incorporated.

Figure 7 shows a cross-section of a profile formed in accordance with the present invention, after its production by coextrusion.

Figure 8 shows a cross-section similar to Figure 7 in which the arrangement of an inner resilient profile can be seen.

Figure 9 shows a complete cross section of the profile incorporated in the panel of a motor-vehicle door and applied to a sliding window pane.

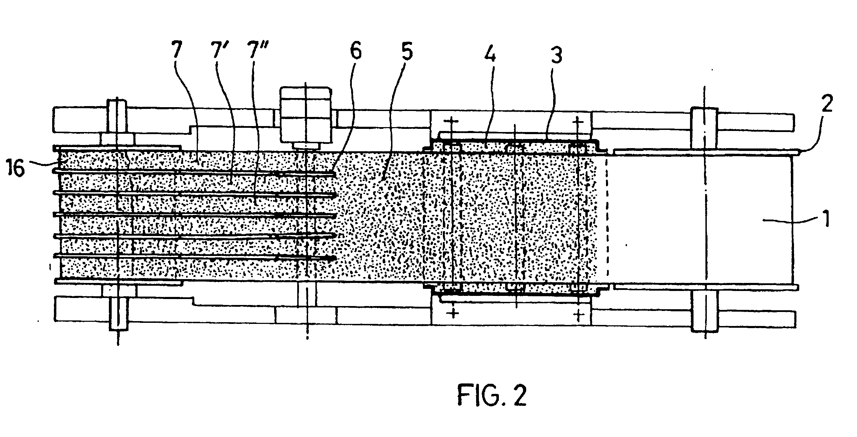

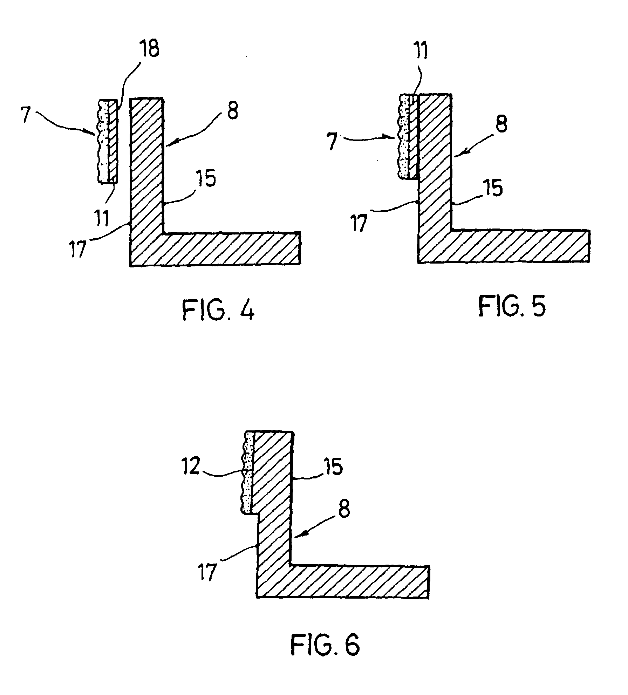

As shown in the drawings, the method of the present application comprises a first step in which a strip 1 supplied from a drum or roller 2 passes into a flocking chamber or booth 3 fitting the base thereof and covering its entire width as can be seen in Figure 2. The flocking is carried out inside the chamber 3, for which purpose the atmosphere inside the chamber is completely occupied by a mass 4 of fine threads or fibres of flock which are applied by an electrostatic field in generally known manner. By virtue of the fact that the strip 1 has a width equivalent to that of the chamber 3, there is no need for screens or shields to produce the strips since an area equivalent to the entire lower face of the chamber will be flocked, preventing waste. The strip 1 the entire surface of which is covered with flock represented by the layer 5, is then subjected to the action of a system of cutting blades, schematically indicated 6, the number of which is variable and which cut the strip 1 longitudinally giving rise to a series of individual strips such as 7, 7', 7"... of predetermined widths. During the next step, a roll 16 of one of the individual strips 7 coming from the longitudinal cutting step supplies the said strip so that it can be fitted on one of the side faces of a profile 8 which is being extruded by an extruder 9 having an extrusion head 10. The flocked strip 7 is fitted on one of the sides of the profile 8, as can be seen in greater detail in Figures 4 to 6, in which it can be seen that the flocked strip 7 is applied to the face 17 of the profile 8 disposed opposite the corresponding face of the strip 7. A transverse pressure roller 13 is provided for improving the adhesion of the strip 7 to the face 17 of the profile 8, the action of the roller 13 being resisted by another roller 14 which acts on the opposite face of the profile to the face 17, this face being indicated 15 for greater clarity. This enables the profile to be guided correctly at the moment when the flocked strip is applied. Given the high temperature of the profile 8 which has just been extruded, the base 18 of the flocked strip 11 which is fitted on the surface 17, Figure 5, melts so that the interface 11 between the profile 8 and the base 18 of the strip 7 carrying the flock completely disappears, as can be seen in Figure 6 in which the profile 8 has, in a region of one of its faces, a flocked finish 12 which is joined with the body of the profile uniformly and without a break, as can be seen in Figure 6.

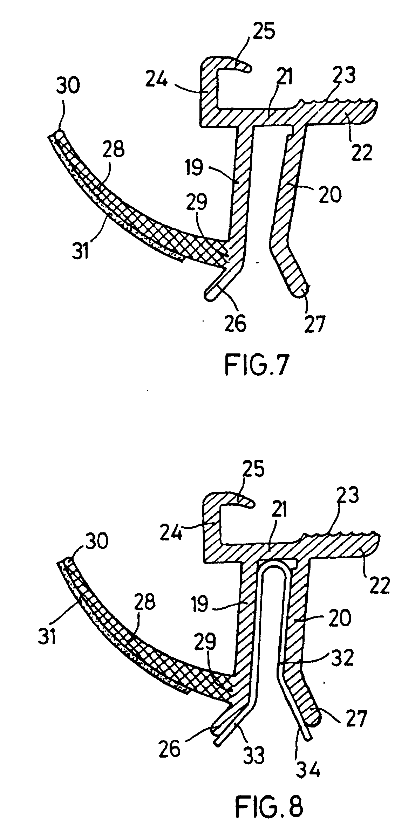

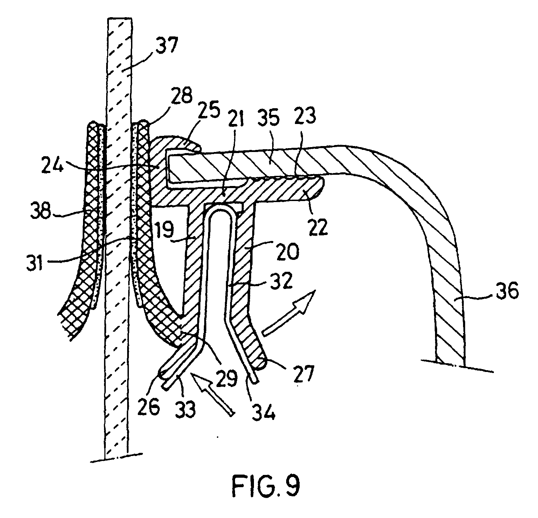

One embodiment of a profile is shown in Figures 7, 8 and 9.

As can be seen in these drawings, the profile of the present invention comprises two flat walls 19 and 20 between which a small angle is formed and which extend from a substantially horizontal element 21 which projects on one side by means of an extension 22 having knurling or teeth 23 for receiving the panel of the door delimiting the opening for the displacement of the window pane. The horizontal element 21 has, at one end, an angled end portion 24 with an inwardly-directed upper flange 25.

The whole set of elements described is made of a semi-rigid material, the flat elements or walls 19 and 20 terminating in respective diverging lower regions 26 and 27.

One of the parallel walls, for example, the wall 19, has a wide, resilient lateral flange 28 for establishing contact with the sliding window pane. In order to have greater flexibility, the said flange 28 has a cross-section which decreases from the base 29 at which it extends from the element 19 to the end 30 where it has the smallest cross-section. The face for contact with the window pane has a flocked surface 31.

During its mounting, the weatherstrip profile may receive internally a resilient, preferably metal profile 32 which is directed downwardly and the end feet 33 and 34 of which fit the similarly inclined lower extensions 26 and 27 of the elements 19 and 20 of the rigid portion of the profile.

The mounting of the weatherstrip profile involves the fitting of the edge of a horizontal portion 35 of the internal face 36 of the door inside the right-angled region 24, the flange 28 being applied against the sliding window pane 37. A second profile which may be of similar or different shape, will also fit on the other face of the sliding window pane 37, and is represented by the flange 28.

By virtue of the construction shown, it is possible to produce unitary resilient weatherstrip profiles which perform their functions in a very satisfactory manner and can be produced easily and at the same time economically.

The method of the present invention thus produces a high-quality flocked profile in which there are no breaks between the flocked profile and the supporting profile and, moreover, with great efficiency since there is no wastage of material or of labour during the flocking step in a chamber or booth.

## Claims

1. Method of flocking profiles of the type comprising an extruded profile structure with a flocked finish coupled to one of its outer faces, **characterized in that** in a first step, a supporting strip (1) fitting the base of the flocking chamber (3) and occupying its entire width is flocked, the single strip produced (5) is then cut longitudinally according to the desired widths producing individual rolls (16) of the desired widths and finally a previously flocked strip (7) is fitted on the face of the profile (8) to be covered with flock at the output of the profile from the extrusion die (10), the base (1) supporting the flock melting by virtue of the residual heat of the profile (8) which has just come out of the extrusion die (10), producing fusion of the base of the strip and enabling it to be incorporated intimately in the surface of the newly extruded profile (8).

2. Method of flocking profiles according to Claim 1, **characterized in that** the base (1) of the flocked strip and the profile (8) receiving the flock have a chemical structure of a similar nature to permit intimate incorporation thereof by fusion.

## Patentansprüche

1. Verfahren zum Versehen von Profilen mit Flockenmuster, bei dem eine extrudierte Profilstruktur mit einem Flockenmuster-Finish an einer ihrer Außenflächen verbunden wird, **dadurch gekennzeichnet, daß** in einem ersten Schritt ein Trägerstreifen (1), der sich in der Basis einer Flockierkammer (3) befindet und deren gesamte Länge belegt, mit einem Flockenmuster versehen wird, der erzeugte Einzelstreifen (5) dann in Längsrichtung entsprechend den gewünschten Breiten zugeschnitten wird, um individuelle Rollen (13) der gewünschten Breiten zu bilden, und schließlich ein zuvor mit Flockenmuster versehener Streifen (7) auf die Fläche des mit dem Flockenmuster zu versehenden Profils (8) am Profilausgang der Extrusionsform (10) bedeckt wird, wobei die Flockenbasis durch Restwärme des Profils, welches gerade aus der Extrusionsform (10) gekommen ist, angeschmolzen wird und damit ein Anschmelzen der Basis des Streifens erreicht wird, so daß sie innig in die Oberfläche des frisch extrudierten Profils (8) inkorporiert werden kann.

2. Verfahren nach Anspruch 1, **dadurch gekennzeichnet, daß** die Basis (1) des mit Flockenmuster versehenen Streifens und des das Flockenmuster aufnehmenden Profils (8) eine chemische Struktur ähnlicher Beschaffenheit aufweisen, um das innige Inkorporieren durch Verschmelzen zu ermöglichen.

## Revendications

1. Procédé de flocage de profilés du type comprenant une structure de profilé extrudé avec une finition de flocage appliquée sur l'une de ses faces extérieures, **caractérisé en ce que** dans une première étape, il est procédé au flocage d'une bande de support (1) montée sur la base de la chambre de flocage (3) et occupant toute sa largeur, la bande unique (5) produite est alors découpée longitudinalement selon les largeurs souhaitées produisant des rouleaux individuels (16) des largeurs souhaitées et enfin une bande préalablement floquée (7) est montée sur la face du profilé à revêtir de flocage à la sortie du profilé de la matrice à extruder (10), la base (1) supportant la fusion de flocage grâce à la chaleur résiduelle du profilé (8) qui vient juste de sortir de la matrice à extruder (10), produisant la fusion de la base de la bande et lui permettant d'être incorporée intimement dans la surface du profilé nouvellement extrudé (8).

2. Procédé de flocage de profilés selon la revendication 1, **caractérisé en ce que** la base (1) de la bande floquée et du profilé (8) recevant le flocage possèdent une structure chimique d'une nature similaire pour permettre leur incorporation intime par fusion.
